# EUROPEAN PATENT APPLICATION

(11) **EP 1 604 798 A1**
(43) Date of publication of application: **14.12.2005**
(21) Application number: 05011866.0
(22) Date of filing: 01.06.2005
(51) Int. Cl.: B29C 45/42, B29C 37/00, B25J 9/04

(54) **Extracting device for molded articles**

(30) Priority: 11.06.2004 JP 2004174443
(71) Applicant: FANUC LTD, Minamitsuru-gun, Yamanashi 401-0597 (JP)
(72) Inventor: Nihei, Ryo, Fujiyoshida-shi, Yamanashi 403-0005 (JP); Yamanaka, Katsuyuki, Room 10-308, Minamitsuru-gun Yamanashi 401-0511 (JP); Kinoshita, Satoshi, Minamitsuru-gun, Yamanashi 401-0511 (JP); Yasumura, Mitsuhiro, Minamitsuru-gun, Yamanashi 401-0302 (JP)
(74) Representative: Schmidt, Steffen J.

(57) **Abstract**

An extracting device (2) for easily exchanging a mold (5). The extracting device (2) is attached to an upper side of a molding machine (1) using an adapter-plate (6). The extracting device includes a plurality of arms (12,14,16) configured to rotate about vertical axes and a vertical motion arm (17), having a gripper (26), mounted to the end of the arms. The mold (5) attached or to be attached to a mold fixing member (1a,1b) is lifted, lowered or translated to the side of the molding machine. The arms (12,14,16) of the extracting device (2) are rotated to be away from a conveying path of the mold (5) such that the arms (12,14,16) do not obstruct the conveying path. In this way, a useful conveying path of the mold (5) may be maintained, thereby the mold (5) or a part of a crane or the like for the mold (5) does not contact the extracting device (2) and the mold (5) may be easily exchanged.

## Description

### BACKGROUND OF THE INVENTION

### 1. Field of the Invention

The present invention relates to an extracting device, loaded on a molding machine, for extracting a molded article when a mold of the machine is unclamped.

### 2. Description of the Related Art

An extracting device is arranged with a molding machine, in order to extract a molded article, positioned in an opened or unclamped mold, and a runner after the molded article is formed in the molding machine. In general, this extracting device is type of a rectangular coordinate system including a plurality of straight axes.

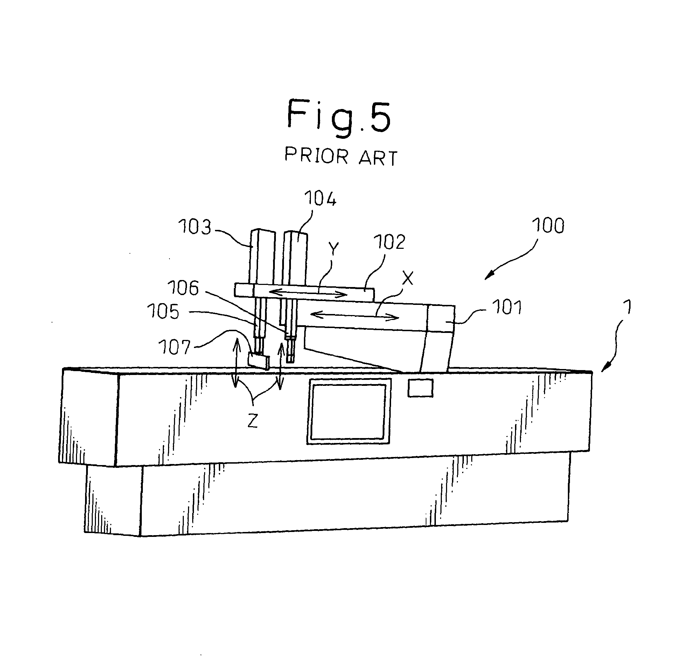

Fig. 5 shows an example of an extracting device of the rectangular coordinate system type, mounted on a molding machine 1. A stationary base 101 of the extracting device 100 of the rectangular coordinate system type is attached to the molding machine 1. The stationary base 101 has a guide means for guiding a movable member 102 in the X-axis direction perpendicular to the longitudinal direction of the molding machine 1. A molded article extracting structure 103 and a runner extracting structure 104 are attached to the movable member 102. The structures 103 and 104 are configured to move in the Y-axis direction perpendicular to the direction of movement of the movable member 102 (X-axis direction). The structures 103 and 104 have a molded article gripping means 105 and a runner gripping means 106, respectively, such as a hand or a sucker attached to the end of the structures. The gripping means 105 and 106 may be driven in the Z-axis direction perpendicular to both of the X-axis and Y-axis. By means of the constitution, the gripping means 105 and 106 may be moved in the X, Y and Z direction so as to grip and extract the molded article from the opened mold and the runner.

Instead of the extracting device of the rectangular coordinate system type, an extracting device having an articulated robot for extracting the molded article from the mold has been developed. (See Japanese Unexamined Patent Publication (Kokai) No. 10-95028 and Japanese Unexamined Patent Publication (Kokai) No. 9-201849.)

A general extracting device is usually mounted to the center of a mold fixing member fixed to a frame of the molding machine. However, in the extracting device 100 of the rectangular coordinate system type shown in Fig. 5, the base 101 widely occupies a space above the mold fixing member. Therefore, when the mold is exchanged, the work of the exchange is troublesome because the work must be done very carefully to avoid interference between the extracting device and the mold or a hoist for the mold.

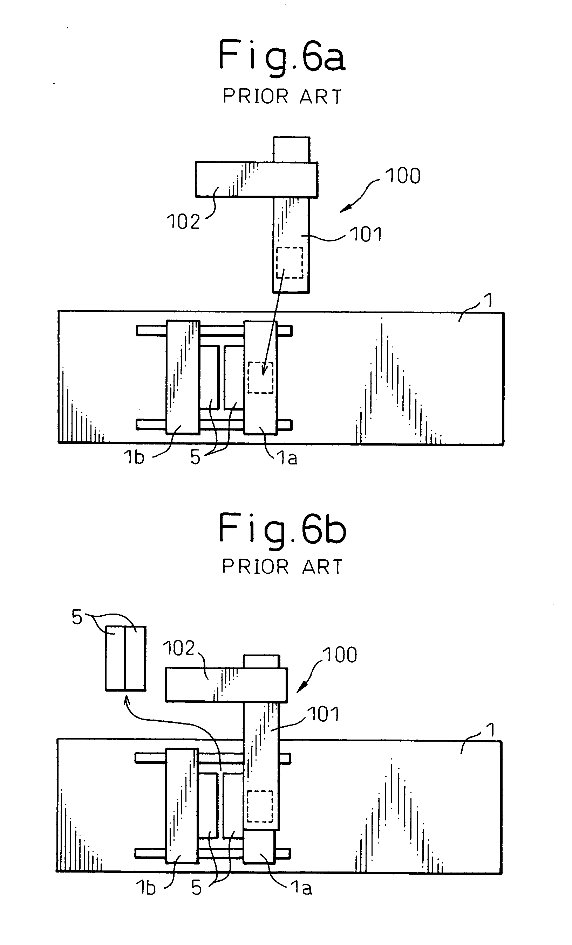

Further, as shown in Figs. 6a and 6b showing top views of the molding machine 1, when the mold having a stable part and a movable part is exchanged, a mold conveying path, for extracting or positioned from or into between a mold fixing member 1a fixed to the frame of the machine 1 and a mold fixing member 1b arranged on a movable board to which the movable part of the mold is attached, is blocked by the extracting device. Therefore, the mold conveying path must be a detour path. In particular, as shown in Fig. 6, the base 101 of the extracting device 100 is attached to the center of the mold fixing member 1a fixed to the frame of the machine 1. Then, as shown in Fig. 6b, the molding machine 1 and the extracting device 100 are operated. Therefore, when the mold 5 fixed to the mold fixing members 1a and 1b is exchanged with another mold, for example, during conveying the mold by a crane, the mold must be conveyed without contacting a part of the machine 1 or the extracting device 100, as shown in Fig. 6b. The work of the exchange is very troublesome.

In case that many molds are frequently exchanged for production, it is important to smoothly exchange the molds. However, it may be difficult to move the arm of the extracting device when the factory is relatively small.

In the extracting device having the articulated robot, such as described in Japanese Unexamined Patent Publication (Kokai) No. 10-95028 and Japanese Unexamined Patent Publication (Kokai) No. 9-201849, the robot has arms configured to cooperate with each other and capable of rotating about axes perpendicular to a horizontal axis. As operating ranges of the arms are relatively narrow, the robot must be positioned near the center of the mold fixing member. Therefore, when the mold is conveyed, the extracting may be an obstacle for conveying the mold, thereby the work for exchanging the mold may be troublesome. Further, when the mold is hung and conveyed by a crane or the like, so as to be lifted from between the mold fixing members 1a and 1b or to be lowered for being attached to the mold fixing member, the robot of the extracting device cannot be moved sufficiently away from the conveying path escape space for the operating part of the machine, whereby the mold, during conveying, may interfere with the extracting device.

On the other hand, the applicant of the invention has proposed, in Japanese Patent Application No. 2004-64666, an extracting device using a robot in which a rotation axis of an arm of the robot is constituted by a vertical axis.

### SUMMARY OF THE INVENTION

An object of the present invention is to provide an extracting device using a robot by which the mold may be easily exchanged.

According to the present invention, there is provided an extracting device loaded on a molding machine having a mold fixing member, for extracting a molded article when a mold of the molding machine is unclamped, the extracting device comprising: a stationary base fixed to the molding machine; a first arm having one end mounted to the stationary base such that the first arm is rotatable about a generally vertical first axis; a second arm having one end mounted to another end of the first arm such that the second arm is rotatable about a second axis generally parallel to the first axis; a third arm having one end mounted to another end of the second arm such that the third arm is rotatable about a third axis generally parallel to the second axis; and a first vertical motion arm configured to go up and down relative to the third arm and having a first gripper at a front end of the first vertical motion arm; wherein the stationary base is positioned away from a position of a mold attachment surface of the mold fixing member and, thereby, each of the first, second and third arms and the first vertical motion arm may be positioned and oriented such that an upper space and a side space of the mold fixing member are opened.

The stationary base may be fixed to an adapter member fixed to the mold fixing member. In this case, the adapter member may be integrally formed with the stationary base.

Alternatively, the stationary base may be fixed to a support member fixed to a frame of the mold machine.

The extracting device may further comprise: an intermediate base member fixed to the third arm; a fourth arm having one end mounted to the intermediate base member such that the fourth arm is rotatable about a fourth axis generally parallel to the third axis; a fifth arm having one end mounted to another end of the fourth arm such that the fifth arm is rotatable about a fifth axis generally parallel to the fourth axis; a sixth arm having one end mounted to another end of the fifth arm such that the sixth arm is rotatable about a sixth axis generally parallel to the fifth axis; and a second vertical motion arm configured to go up and down relative to the sixth arm and having a second gripper at a front end of the second vertical motion arm. Therefore, the extracting device may extract a runner as well as the molded article.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 is a schematic perspective view showing an extracting device loaded on a molding machine of one embodiment of the invention;
Figs. 2a and 2b are explanatory views of arm constitutions of the extracting device of the embodiment;
Fig. 3 is an explanatory view of the extracting device of the embodiment, attached to a mold fixing member of the molding machine using an adapter plate;
Fig. 4 is an explanatory view of the extracting device of the embodiment, attached to a support member arranged on a frame of the molding machine;
Fig. 5 is a perspective view showing of the molding machine including the extracting device of rectangular coordinate system type of prior art; and
Figs. 6a and 6b are explanatory views of the extracting device of rectangular coordinate system type of prior art, showing situations in which a stationary base is attached to the molding machine and the mold is exchanged, respectively.

### DETAILED DESCRIPTION

One embodiment of the present invention is explained below with reference to drawings.

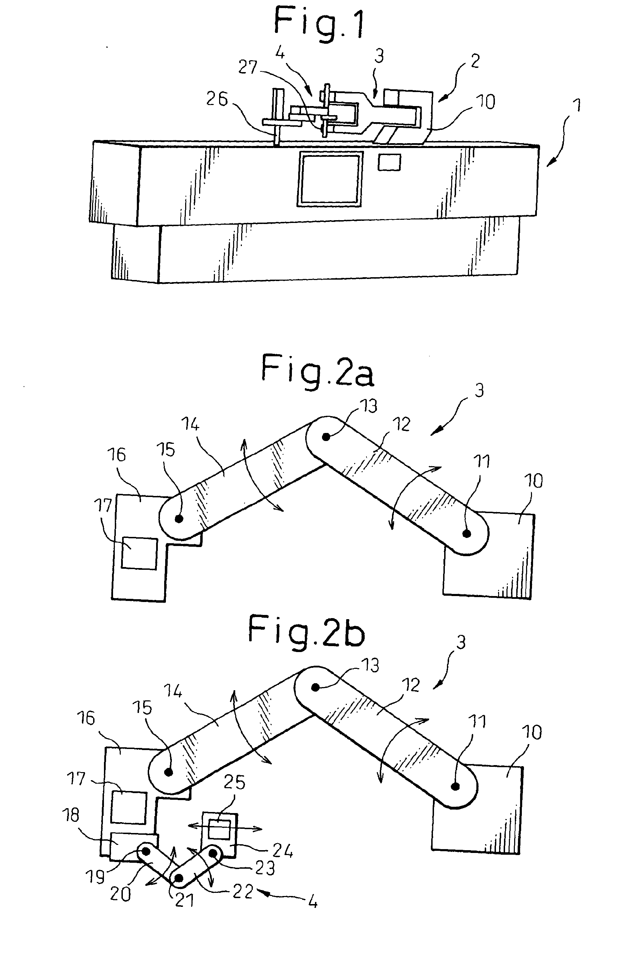

Fig. 1 is a schematic perspective view of an extracting device 2 for a molded article, loaded on a molding machine 1. The extracting device 2 is mounted on an upper part of a mold fixing member fixed to a frame of the molding machine 1. The extracting device of the embodiment is constituted by a first unit 3 for driving a first vertical motion arm and a second unit 4 detachably mounted to the end of the first unit 3.

Fig. 2a is an explanatory view of an arm constitution of the extracting device 2. A stationary base 10 is configured to connect the extracting device 2 to the molding machine 1. A first arm 12 has one end mounted to the stationary base 10 such that the first arm 12 is rotatable about a generally vertical first axis 11. A second arm 14 has one end mounted to another end of the first arm 12 such that the second arm 14 is rotatable about a second axis 13 generally parallel to the first axis 11. A third arm 16 has one end mounted to another end of the second arm 14 such that the third arm 16 is rotatable about a third axis 15 generally parallel to the second axis 13. Further, a first vertical motion arm 17, mounted to the third arm 16 and configured to move parallel to the third axis 15 (or vertically), has a first gripper 26, at its front end, such as a hand or a sucker for gripping the molded article.

The stationary base 10, the first axis and arm 11 and 12, the second axis and arm 13 and 14, the third axis and arm 15 and 16, and the first vertical motion arm 17 described above together constitute the first unit 3.

Further, as shown in Fig. 2b, an intermediate member 18 may be detachably attached to the third arm 16 or the end of the first unit 3, by a fastening means such as a screw. A fourth arm 20 has one end mounted to the intermediate member 18 such that the fourth arm 20 is rotatable about a fourth axis 19 generally parallel to the third axis 15. A fifth arm 22 has one end mounted to another end of the fourth arm 20 such that the fifth arm 22 is rotatable about a fifth axis 21 generally parallel to the fourth axis 19. A sixth arm 24 has one end mounted to another end of the fifth arm 22 such that the sixth arm 24 is rotatable about a sixth axis 23 generally parallel to the fifth axis 21. Further, a second vertical motion arm 25, mounted to the sixth arm 24 and configured to move parallel to the sixth axis 23, has a second gripper 27, at its front end, such as a hand or a sucker for gripping a runner. The intermediate member 18, the fourth axis and arm 19 and 20, the fifth axis and arm 21 and 22, the sixth axis and arm 23 and 24, and the second vertical motion arm 25 together constitute the second unit 4.

The first and the second units 3 and 4 may be separated from each other. In particular, the second unit 4 may be separated from or combined with the first unit 3 by removing or attaching the intermediate member 18 from or to the third arm 16. For example, when the first and the second units 3 and 4 are configured as extracting devices for the molded article and the runner, respectively, the second unit 4 may be detached from the first unit 3, if required.

The first to sixth arms 12, 14, 16, 20, 22 and 24 are configured to rotate about the axes parallel to each other. Therefore, when the stationary base 10 is mounted to the upper part of the molding machine 1, as in this embodiment, each of the arms rotates about the vertical axis, in other words, on a horizontal plane. Thus, as all arms may rotate on a horizontal plane, an overall height of the molding machine including the extracting device may be limited to a relatively low height.

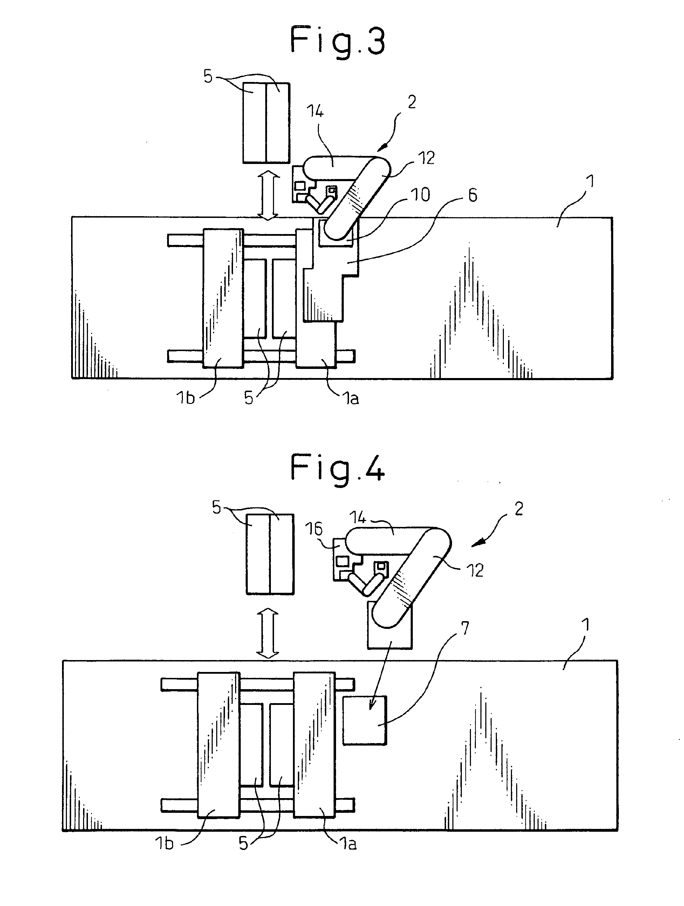

Fig. 3 is an explanatory view showing the extracting device 2 attached to the molding machine 1. An adapter member or an adapter plate 6 is fixed to a mold fixing member 1a fixed to the frame of the molding machine 1. The extracting device 2 is fixed, using the adapter plate 6, to a position away from the center of the mold fixing member 1a. While the extracting device 2 is thus fixed to the molding machine 1, when the mold is exchanged, the first and the second arms rotate, as shown in Fig. 3, such that each arm is away from a position of a mold attachment surface of the mold fixing member 1a to which a stable part of the mold is attached, thereby an upper space between the mold fixing member 1a and the mold fixing member 1b to which a movable part of the mold is attached is opened and, also a side space, i.e., a space extending perpendicular to the opening-and-closing direction of the mold or the longitudinal direction of the machine 1 is opened. Therefore, when the mold 5 is exchanged, or is attached and removed to and from the mold fixing member 1a, 1b, lifting, lowering and translating to the side of the machine 1 of the mold 5 by a crane or the like may be carried out without contacting the mold or a part of the crane to the extracting device 2, whereby the mold may be easily exchanged.

In the above embodiment, the stationary base 10 of the extracting device 2 is fixed to the mold fixing member 1a using the adapter plate 6. However, the adapter plate 6 may be integrally formed with the stationary base 10. In other words, a position of the mold fixing member 1a where the stationary base is attached and a position of the stationary base where the first axis is arranged are offset from each other, such that the arms of the extracting device 2 are away from the position of the mold attachment surface of the mold fixing member 1a to which the stable part of the mold is attached, whereby the upper space and the side space between the mold fixing member 1a and the mold fixing member 1b to which a movable part of the mold is attached are opened, to keep a useful mold conveying path.

Fig. 4 shows an example in which the extracting device 2 is not fixed to the mold fixing member 1a but is fixed to a support member 7 fixed to the frame of the molding machine 1. The support member 7 is arranged on the back side of the machine 1 relative to the longitudinal center line of the machine 1 and near a surface opposite to the mold attachment surface of the mold fixing member 1a fixed to the frame of the machine 1.

By rotating the first and the second arms of the extracting device 2 attached to the support member 7, as shown in Fig. 4, the upper and the side space of the mold 5 attached to the mold fixing members 1a and 1b may be opened. Therefore, lifting of the mold attached to the fixing member, translating of another mold to the side of the machine 1 and attaching of the other mold to the mold fixing member, using a crane or the like, is easy.

According to the invention, when the mold is exchanged, it is not necessary to take care not to contact the mold or a part of the crane or the like to the extracting device, while maintaining a mold conveying path for conveying the mold by the crane.

While the invention has been described with reference to specific embodiments chosen for the purpose of illustration, it should be apparent that numerous modifications could be made thereto, by one skilled in the art, without departing from the basic concept and scope of the invention.

## Claims

1. An extracting device (2) loaded on a molding machine (1) having a mold fixing member (1a, 1b), for extracting a molded article when a mold (5) of the molding machine (1) is unclamped, the extracting device comprising:
a stationary base (10) fixed to the molding machine (1);
a first arm (12) having one end mounted to the stationary base (10) such that the first arm (12) is rotatable about a generally vertical first axis (11);
a second arm (14) having one end mounted to another end of the first arm (12) such that the second arm (14) is rotatable about a second axis (13) generally parallel to the first axis (11);
a third arm (16) having one end mounted to another end of the second arm (14) such that the third arm (16) is rotatable about a third axis (15) generally parallel to the second axis (13); and
a first vertical motion arm (17) configured to go up and down relative to the third arm (16) and having a first gripper (26) at a front end of the first vertical motion arm (17);
wherein the stationary base (10) is positioned away from a position of a mold attachment surface of the mold fixing member (1a, 1b), whereby each of the first, second and third arms (12, 14, 16) and the first vertical motion arm (17) may be positioned and oriented such that an upper space and a side space of the mold fixing member (1a, 1b) are opened.

2. The extracting device as set forth in claim 1,
wherein the stationary base (10) is fixed to an adapter member (6) fixed to the mold fixing member (1a).

3. The extracting device as set forth in claim 2,
wherein the adapter member (6) is integrally formed with the stationary base (10).

4. The extracting device as set forth in claim 1,
wherein the stationary base (10) is fixed to a support member (7) fixed to a frame of the mold machine (1).

5. The extracting device as set forth in any preceding claims, further comprising:
an intermediate base member (18) fixed to the third arm (16);
a fourth arm (20) having one end mounted to the intermediate base member (18) such that the fourth arm (20) is rotatable about a fourth axis (19) generally parallel to the third axis (15);
a fifth arm (22) having one end mounted to another end of the fourth arm (20) such that the fifth arm (22) is rotatable about a fifth axis (21) generally parallel to the fourth axis (19);
a sixth arm (24) having one end mounted to another end of the fifth arm (22) such that the sixth arm (24) is rotatable about a sixth axis (23) generally parallel to the fifth axis (21); and
a second vertical motion arm (25) configured to go up and down relative to the sixth arm (24) and having a second gripper (27) at a front end of the second vertical motion arm (25).
